# EUROPEAN PATENT SPECIFICATION

(11) **EP 0 492 814 B1**
(45) Date of publication and mention of the grant of the patent: **15.03.1995**
(21) Application number: 91311068.0
(22) Date of filing: 29.11.1991
(51) Int. Cl.: B01D 53/04, C23G 5/04, D06F 43/08

(54) **Method of and apparatus for controlling the solvent vapor concentration in a gas lock of an apparatus**
Verfahren und Vorrichtung zur Kontrolle der Lösungsmitteldampf-Konzentration in einer Gasschleuse einer Vorrichtung
Procédé et dispositif pour contrôler la concentration de la vapeur de solvant dans une écluse à gaz d'un appareil

(30) Priority: 20.12.1990 GB 9027705
(43) Date of publication of application: 01.07.1992
(73) Proprietor: THE DOW CHEMICAL COMPANY, Midland, Michigan 48640 (US)
(72) Inventor: Boppart, Stephan Walter, CH-8820 Wadenswil (CH); Kumin, Marius Adelbert Maria, CH-6330 Chem (CH)
(74) Representative: Raynor, John

(56) References cited:
- DE-C- 3 614 450

## Description

The present invention relates to a method of controlling the solvent vapor concentration in a gas lock of an apparatus containing a treating chamber and at least one gas lock as well as apparatuses useful therefore. The solvent vapor is mixed with air and is obtained in the treatment of articles, such as a cleaning process, in the treating chamber.

Methods and apparatuses for treating, for example cleaning, articles with organic solvents are well known. They are for example used in the dry cleaning of textiles etc. and for the degreasing of metals. The organic solvents are recovered during the drying phase in order to avoid losses of solvents and environmental pollution associated therewith. In some cleaning processes the gaseous organic solvents which are in the treating chamber during the drying phase are cooled and condensed in a condenser. However, mainly hydrocarbons and particularly chlorinated and/or fluorinated hydrocarbons are used as solvents in the cleaning process. Many of them, for example, trichlorotrifluroethane, 1,1,1-trichloroethane, trichloromonofluoromethane, perchloroethylene, trichloroethylene or methylene chloride have a low boiling point and cannot be recovered by condensation to a sufficient extent. Therefore, the non-condensed organic solvents are usually adsorbed by adsorbents, such as activated carbon. Several processes have been suggested for recovering the organic solvents in the cleaning of articles.

German Offenlegunsschrift DE-A-36 14 450 suggests a process for recovering volatile solvents from cleaning apparatuses wherein the waste air is cooled, passed through at least two adsorbers and then released to the environment. In the cooler water vapor is condensed and separated from the volatile solvent. While the waste air is passed through the first and second adsorber, an additional adsorber is regenerated. Regeneration of the adsorber is carried out by means of heated air. The heated air containing the desorbed solvent is cooled in a second cooler in order to recover the desorbed solvent. However, there is still a risk of solvent release to the environment if the adsorber is exhausted or close to exhaustion.

U.S. Patent US-A-3,883,325 suggests recovering solvent vapors from an air stream which is recycled through an air cooler and then through an adsorbing unit in which the air stream, after it has left the cooler, is heated again before entering the adsorber. It is suggested that the air stream is first passed through the cooler bypassing the adsorber and then, after the solvent concentration in the air has been reduced, the adsorber is connected into the circuit. Activated carbon is used for adsorbing the organic solvents.

British Patent Specification GB-A-996,578 relates to a dry cleaning apparatus comprising a cleaning drum, a condenser and a solvent adsorber which is filled with activated carbon. German Offenlegungsschrift DE-A-37 37 783 also relates to a dry cleaning machine having a cleaning drum, a condenser and an adsorber containing activated carbon.

According to the teachings of U.S. Patent US-A-3,883,325, British Patent GB-A-996,578 and German Offenlegungsschrift DE-A-37 37 783, activated carbon is regenerated with steam, the steam-solvent mixture is condensed and water is separated from the organic solvent. This necessary separation step is disadvantageous.

Accordingly, other methods and means for regenerating the adsorbent, such as activated carbon, have been suggested.

U.S. Patent US-A-4,583,985 relates to the recovery of organic solvents in dry cleaning and solvent finishing. In the taught process the solvents which occur in the form of a solvent vapor/air mixture are partially condensed by cooling. A saturation partial pressure of the solvent in the solvent vapor/air mixture of not more than 0.25 is set up. The solvent vapors are adsorbed with activated carbon while the solvent free air is blown out to the environment. The adsorbed solvents are desorbed by means of a solvent vapor/air mixture of the same concentration as in the adsorption process and at temperatures of 100°C to 150°C, the flow through the activated carbon being in the opposite direction to that in the adsorption process. The desorbed solvent is condensed in a condenser. However, a condenser having a relatively high heat exchange area and a high performance compressor are necessary in combination with a liquefier in order to reach this saturation partial pressure. Furthermore, although a high amount of solvent vapor is adsorbed in the activated carbon, there is still a risk of solvent release to the environment. An undesirably high amount of solvent vapor may be released to the environment if the adsorption capacity of the activated carbon is close to exhaustion or is exhausted.

German Patent DE-C-36 09 587 (equivalent to U.S. Patent US-A-4,788,776) suggests a dry-cleaning machine containing a cleaning drum, a heat exchange unit, consisting of a cooler and a heater, one adsorber and a fan for circulating air. The conduit system has several by-passes which allow the following connections, seen in the direction of the circulating air: a) cleaning drum - heat exchange unit - cleaning drum, b) cleaning drum - adsorber - cleaning drum, c) adsorber - heat exchange unit - adsorber. In the disclosed cleaning process the solvent vapor is partially condensed by circulating the solvent vapor/air mixture in conduit system b) and the adsorbed solvent is then desorbed by circulating air in conduit system c) wherein the air is heated in the heater, the hot air desorbs the solvent in the adsorber at a high temperature and the desorbed solvent is condensed in the cooler. However, the necessary by-passes require considerable space and at least four butterfly valves.

For avoiding these by-passes and butterfly valves German Offenlegungsschrift DE-A-37 26 245 (equivalent to U.S. Patent US-A-4,850,119) suggests, after partial condensation of the solvent vapors originating from the cleaning drum, removal of a portion of the circulating air stream which portion is passed over an adsorber. Two dependent air circulations are suggested. The adsorbent in the adsorber is regenerated with hot gas and the desorbed solvent is condensed in a cooler. Unfortunately, the suggested process and equipment are relatively complicated.

European patent EP-A-0 157 090 (equivalent to U.S. Patent US-A-4,844,743) suggests a cleaning machine containing a treating chamber, a drying compartment and a drying gas circuit. The cleaned articles are dried by means of a drying gas. In the drying gas circuit are arranged, seen in the direction of the circulating drying gas, a cooler, an adsorber and the drying compartment. In the drying and desorption phase of the cleaning process, the solvent vapor of the drying gas is partially condensed in the condenser and the drying gas is then passed over the heated adsorber for desorbing solvent vapor from the adsorber. The desorbed solvent vapor is condensed in the condenser. The drying gas is purified by passing it over a cooled adsorber. However, the condensation of all the solvent vapors is energy-consuming.

Due to the deficiencies of the known methods of recovering solvent vapors and of the known apparatuses for treating articles, it would be desirable to provide a simple solution for solving the problems relating to the solvent vapors in the treatment of articles, such as cleaning operations. Specifically, it would be desirable to avoid the contact of the solvent vapors with steam during their desorption. Furthermore, it would be desirable to provide a very simple apparatus for treating articles which minimizes the contamination of the environment with solvent vapors during its operation.

Accordingly, one aspect of the present invention is a method of controlling the solvent vapor concentration in a gas lock of an apparatus containing a treating chamber and at least one gas lock which solvent vapor is mixed with air and is obtained in the treatment of articles in the treating chamber. The method of the present invention comprises the following steps:
a) isolating the gas lock from treating chamber, passing gaseous solvent vapor/air mixture from the gas lock through at least one adsorber containing an adsorbent for the organic solvent and recycling the outlet gas stream from the adsorber to the gas lock;
b) after completion of the adsorption, removing treated articles from the gas lock and/or loading the gas lock with articles to be treated; and
c) heating the adsorbent and passing a gas stream from the treating chamber or from the gas lock through said at least one adsorber containing the adsorbent and recycling the outlet stream from the adsorber directly to the treating chamber or to the gas lock.

A further aspect of the present invention is an apparatus for carrying out the method of the present invention. The apparatus contains a treating chamber, at least one gas lock, at least one adsorber, a conduit system, at least one ventilator and a control system allowing the control of the gas circulation in said conduit system wherein the conduit system connects a) the gas lock(s) and the adsorber(s) and, optionally, b) the treating chamber and the adsorber(s) and the ventilator(s) and the control system allows one or two ways of gas circulation, said ways being
i) gas lock - adsorber(s) - gas lock; or, optionally,
ii) treating chamber - adsorber(s) - treating chamber.

In some cases when carrying out the method of the present invention, it is useful to partially condense the solvent vapor before it is passed through the adsorber during the adsorption step a). In such cases the apparatus for carrying out the method of the present invention should be equipped with a condenser.

Accordingly, a further aspect of the present Invention is an apparatus which contains a treating chamber, at least one gas lock, at least one adsorber, at least one condenser, a conduit system, at least one ventilator and a control system allowing the control of the gas circulation in said conduit system
wherein
the condenser(s) and the adsorber(s) are in parallel,
the conduit system connects a) the gas lock(s) and the condenser(s), b) the gas lock(s) and the adsorber(s) and, optionally, c) the treating chamber and the adsorber(s) and
the ventilator(s) and the control system allow two or three ways of gas circulation, said ways being
i) gas lock - condenser - gas lock; or
ii) gas lock - adsorber(s) - gas lock; or, optionally,
iii) treating chamber - adsorber(s) - treating chamber.

Figure 1 is a diagrammatic illustration of one embodiment of the apparatus of the present invention.

Figure 2 is a diagrammatic illustration of another embodiment of the apparatus of the present invention.

Figure 3 is a diagrammatic illustration of yet another embodiment of the apparatus of the present invention.

Figure 4 is a diagrammatic illustration of yet another embodiment of the apparatus of the present invention.

The method of the invention is useful in any method of treating articles in a closed apparatus. Specifically, the method of the invention is useful in the cleaning of articles such as textiles, furs or leather, electronic parts or metals. It is particularly useful in the cleaning of metals or electronic parts such as the degreasing of metallic surfaces.

The method of the present invention is particularly useful if the solvents are hydrocarbons, typically having four or more carbon atoms, or a mixture of such hydrocarbons, such as gasoline, or partially or totally halogenated hydrocarbons, in particular chlorinated and/or fluorinated saturated and unsaturated hydrocarbons having one to three carbon atoms such as methylene chloride, 1,1,1-trichloroethane, carbon tetrachloride, 1,1,2,2-tetrachloroethene, perchloroethylene, trichloroethylene, trichloromonofluoromethane or trichlorotrifluoroethane. The solvent may also be a mixture of hydrocarbons, and partially or totally halogenated hydrocarbons.

According to the method of the present invention the articles are treated in an apparatus containing a treating chamber and at least one gas lock.

By "treating chamber" is meant any housing wherein the treatment of articles, such as a cleaning process, can take place. Such treating chambers are known in the art.

By "gas lock" is meant any container, such as a chamber, tank, storage device etc., which is provided with two opening/closing means, such as doors etc. which are substantially gas tight in the closed state. The gas lock is provided with a first or inside opening/closing means, such as a substantially gas tight door, which is located between the treatment chamber and the gas lock. The gas lock is further provided with a second or outside opening/closing means, such as a substantially gas tight door, which serves as a separation between the gas lock and the environment outside the apparatus of the invention. The apparatuses of the present invention preferably contain one gas lock, however, they may also be equipped with two or more gas locks. The following description relates to an apparatus which is only provided with one gas lock.

The articles are treated in the treating chamber. The treating chamber usually contains one or more containers, such as one or more tanks, containing the liquid organic solvent. The articles may be directly placed into the solvent or the articles may be placed in liquid-permeable containers, such as baskets, which are immersed into the solvent during the treatment of the articles. During the treatment of the articles, the first opening/closing means of the gas lock which is located between the gas lock and the treating chamber can be closed or open. The second opening/closing means of the gas lock is usually closed during the treatment of the articles. When the first opening/closing means is open, the second opening/closing means must be closed. After the treatment the articles are removed from the organic solvent.

After having treated the articles in the treatment chamber, they are placed into the gas lock via the first opening/closing means of the gas lock; the first opening/closing of the gas lock located between the gas lock and the treating chamber is then closed in order to isolate the gas lock from the treating chamber. The gas lock contains a gaseous vapor/air mixture originating from articles being not completely dry and/or from the gas exchange between the treating chamber and the gas lock when the first opening/closing means located between the gas lock and the treating chamber is open.

According to method step a) of the invention gaseous solvent vapor air mixture is passed from the gas lock through at least one adsorber. The adsorption step a) is described in detail further below.

After completion of the adsorption, the treated articles are removed from the gas lock and/or the gas lock is loaded with articles to be treated. The unloading and/or loading of the gas lock typically takes place via the opened second opening/closing means of the gas lock providing a substantially gas tight separation between the gas lock and the environment outside the apparatus of the invention. When carrying out the method of the present invention, the second opening/closing means should be closed when the first opening/closing means between the gas lock and the treating chamber is open and vice versa. In order to minimize the contamination of the environment with solvent vapor, it is essential that not both opening/closing means of the gas lock are open whenever the apparatus of the invention contains solvent vapor.

It is very advantageous that the method of the invention is carried out in an apparatus which not only contains a treating chamber but also an air lock. The size of the treating chamber can be chosen in such a manner to allow an efficient treatment of the articles, even a large number of articles at the same time. The gas lock usually only serves as an outlet/inlet device for the articles which have been treated or which are to be treated. The size of the gas lock is chosen as small as possible but large enough to temporarily store the articles. Typically, the size of the gas lock is substantially smaller, for example from 5 to 30 times smaller, preferably from 8 to 25 times smaller, than the size of the treating chamber. Since the treated articles are placed into the gas lock and the treating chamber is closed by means of the first opening/closing means of the gas lock, only a relatively small gas volume in the gas lock has to be purified before the second opening/closing means is opened for unloading and/or loading purposes. Only a gas exchange between the gas lock and the environment takes place but not between the treating chamber and the environment. If the treated articles were directly removed from the treating chamber, the entire gas volume of the treating chamber would need to be purified in order to avoid an unduly high contamination of the environment when opening the treating chamber for unloading and/or loading purposes. Furthermore, removal of the solvent vapor in the treating chamber is impossible if the treating chamber contains open containers which are filled with liquid solvent.

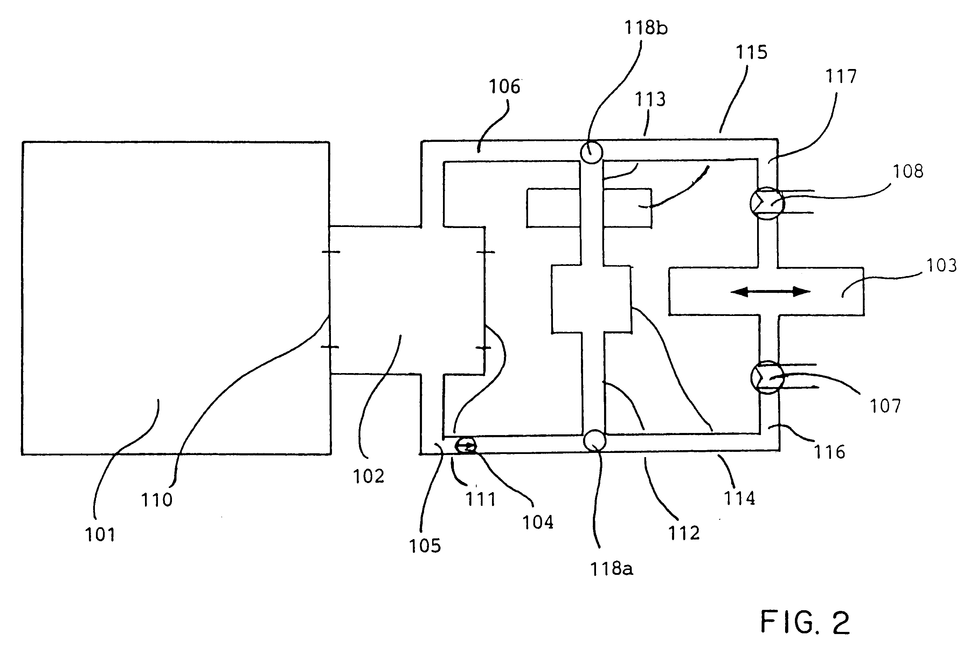

Before carrying out the adsorption step a) according to the method of the invention, treated articles may be dried and the solvent vapor may be partially condensed in order not to load the adsorbent with very high amounts of solvent. If partial condensation is desired, the apparatus of the invention is provided with a condenser, for example as illustrated in Figure 2 further below. Useful temperatures depend on the type of organic solvent and on the available condenser. For partially condensing halogenated hydrocarbons, the temperature usually is below 5°C, preferably below -10°C and more preferably below -20°C. The solvent vapor is for example condensed by transferring the solvent vapor/air mixture from the gas lock to a condenser and recycling the outlet stream from the condenser to the gas lock. A pump or ventilator is useful for cycling the solvent vapor/air mixture from the gas lock to the condenser and from the condenser back to the gas lock. If additional drying of the articles is desired, it is advisable to heat the solvent vapor/air mixture after having passed the condenser such that a warm solvent vapor/air mixture contacts the articles in the gas lock. The solvent vapor/air mixture may pass the condenser and the gas lock several times.

In step a) of the method of the invention, gaseous solvent vapor/air mixture is passed from the gas lock through an adsorber containing an adsorbent for the organic solvent. After the solvent vapor/air mixture has passed through the adsorber, the outlet stream from the adsorber is recycled to the gas lock. The solvent vapor/air mixture is circulated by means of a pump or ventilator. If the solvent vapor/air mixture is partially condensed prior to adsorption step a), the pump or ventilator used in adsorption step a) can be different from or the same as the one used for circulating the solvent vapor/air mixture between the gas lock and the condenser. The solvent/vapor air mixture can be passed through the adsorber and recycled to the gas lock several times until the concentration of the solvent vapor is sufficiently low or the adsorbent is exhausted. If the adsorbent is exhausted before the concentration of the solvent vapor in the solvent vapor/air mixture is low enough, solvent vapor/air mixture can be passed through one or more further adsorbers which are arranged in a parallel fashion with respect to each other. Useful types of adsorbers are generally known. For example, in one useful type of adsorber the adsorbent is arranged in several individual portions in order to make an optimal use of the adsorbent capacity. The adsorbers can contain relatively short beds which are for example shorter than wide, seen in the direction the adsorption takes place. According to one preferred adsorption method, the adsorber containing the adsorbent for organic solvents is moved in a direction which is substantially perpendicular to the gas flow through the adsorber during the adsorption step. Such as adsorber is illustrated in Figure 2 and makes an optimal use of the adsorbent capacity.

The adsorption of the organic vapor is conveniently carried out at about atmospheric pressure. The adsorption temperature preferably is below 50°C, more preferably below 30°C. The adsorption temperature usually is above -30°C, a temperature of from -20°C to 20°C being preferred. It may be advantageous to cool the solvent vapor/air mixture before or during it passes through the adsorber and/or to heat the outlet gas stream of the adsorber.

Preferably, the adsorption is continued until a state of equilibrium is reached in the adsorbent at the chosen adsorption temperature.

When the adsorption of the solvent vapor is completed, in a second step b) the treated articles are removed from the gas lock and/or the gas lock is loaded with articles to be treated.

In a further step c), the adsorbent is heated and a gas stream from the treating chamber or from the gas lock is passed through the adsorber(s) containing the adsorbent. The outlet stream from the adsorber(s) is directly recycled to the treating chamber or to the gas lock. Preferably, the gas stream is circulated between the gas lock and the adsorber(s). In this case the method of the invention can be carried out in a very simple apparatus which does not need to contain a conduit system which connects the treating chamber and the adsorber(s). When circulating the gas stream between the gas lock and the adsorber(s), the second opening/closing means of the gas lock is closed prior to circulation in order to avoid release of the desorbed solvent vapor to the environment. The adsorbent may be heated before or preferably after closing of the second opening/closing means, but air circulation should only be started after having closed the second opening/closing means, i.e. the outside door, of the gas lock. Air circulation is preferably started during or after heating of the adsorbent. Preferably, air is circulated for desorbing (regenerating) the adsorbent until a state of equilibrium is reached in the adsorbent at the chosen desorption temperature. The equilibrium mainly depends on the desorption temperature and on the solvent vapor concentration in the gas stream used for desorbing the adsorber. The maximum solvent vapor concentration in the gas stream used for desorbing the adsorber is such that the equilibrium loading of the adsorbent at the desorption temperature is lower than the equilibrium loading of the adsorbent at the adsorption temperature at the end of the adsorption cycle. If the solvent vapor concentration in the treating chamber is too high, in any event the gas stream is circulated between the gas lock and the adsorber(s) in the desorption step.

The regeneration of the adsorbent can be carried out in a similar manner as the adsorption described above except that the temperature of the adsorbent is higher. The gas stream can flow during the desorption step in the same direction as in the adsorption step, however, it can also flow in the opposite direction (counter-current flow). A temperature of more than 70°C, in particular of 80°C or more, is preferred in order to achieve a reasonable desorption rate. The desorption temperature is generally below 170°C. In the case of halogenated hydrocarbons or halocarbons, it is recommended that the desorption temperature be not more than 120°C, preferably not more than 110°C. The increased temperature may be achieved by heating the air by means of a known heater before it passes through the adsorber. Alternatively, the adsorbent can be directly heated. A known heat exchanger may be used for heating the adsorbent. Such a heat exchanger may for example make use of a hot/cold water system for controlling the temperature in the adsorbent.

If several adsorbers have been used for adsorbing the solvent vapor in the adsorption step a), generally that adsorber is desorbed first which has been used as the last one in the adsorption process; that means that the adsorbers are desorbed in the opposite sequence, compared to the sequence in which they are used for adsorption purposes. The solvent vapor obtained from the desorption of each adsorber is recycled to the treating chamber or to the gas lock via a direct conduit from each adsorber to the treating chamber or to the gas lock.

Whatever the number of adsorbers is in the method of the invention, the gas stream being released from the adsorber(s) in the desorption step is directly recycled to the treating chamber or gas lock without condensing a portion of the solvent vapor before the gas stream enters the treating chamber or the gas lock. Accordingly, the method of the invention comprises a very simple desorption step which does not have the disadvantages of the desorption step in known methods which make use of a condensation step. The main disadvantages of the usual condensation step in known methods are for example a complicated system of controlling the gas flow, the consumed energy for cooling and condensing the desorbed solvent vapor and the necessity of handling the condensed organic solvent in an additional step.

Especially if in the method of the invention the solvent vapor is not partially condensed before passing the solvent vapor/air mixture from the gas lock through the adsorber(s) in the adsorption step a), the method can be carried out in a simple apparatus. The apparatus can contain a simple conduit system which only allows gas circulation in one or two ways, said ways being
i) gas lock - adsorber(s) - gas lock; or, optionally,
ii) treating chamber - adsorber(s) - treating chamber.

Preferably, in the desorption step the gas is circulated between the gas lock and the adsorber(s) which allows the use of a very simple apparatus containing a conduit system which only allows the gas circulation between the gas lock and the adsorber(s).

Hereinbefore a method of the present invention has been described wherein the apparatuses for carrying out the method only contain one gas lock. However, as stated above, the apparatuses can be equipped with two or more gas locks. If an apparatus contains two gas locks, the articles to be treated can be passed into the treating chamber via the first gas lock and after the treatment and the adsorption step a) the articles can be removed from the treating chamber via the second gas lock. This embodiment of the method of the present invention allows a continuous operation of the apparatus. It is understood that the second opening/closing means, i.e. the outside doors, of both gas locks are only opened after the solvent vapor concentration in the gas locks has been reduced to an acceptable level in the adsorption step a) described above. The adsorption and desorption steps a) and c) described above can be but do not have to be carried out simultaneously for both gas locks. The apparatuses of the present invention can contain a conduit system which connects the first gas lock with a first adsorber system and which connects the second gas lock with a second adsorber system.

Several types of adsorbents can be comprised in the adsorbers. Useful adsorbents are for example activated carbon, molecular sieves, silica gel, adsorptive or absorptive resins.

The most preferred adsorptive resins are adsorptive porous resin beads which have been prepared by swelling purified haloalkylated, cross-linked beads of a copolymer comprising units of i) styrene or an alkylstyrene (for example a C₁-C₃ alkylstyrene such as alpha-methyl styrene) and ii) divinylbenzene and/or trivinylbenzene in an inert organic liquid and post-cross-linking the swollen beads in the presence of a Friedel-Crafts catalyst. The haloalkylated cross-linked copolymer beads of i) styrene or an alkylstyrene and ii) divinylbenzene and/or trivinylbenzene which are used for post-cross-linking to form the adsorptive porous resin beads are a well-known class of materials as exemplified by U.S. Patents US-A-4,297,220, US-A-4,564,644 and US-A-4,382,124. The swelling and post-cross-linking in the presence of a Friedel-Crafts catalyst is generally known from East German patent application DD-A-249,703. Those adsorptive porous resin beads are particularly suitable for adsorbing halocarbons or halogenated hydrocarbons that are microporous and are made i) from 99.8 to 98.2 percent, preferably from 99.7 to 98.5 percent and more preferably from 99.5 to 99.0 percent styrene or an alkylstyrene and ii) from 0.2 to 1.8 percent, preferably from 0.3 to 1.5 percent and more preferably from 0.5 to 1.0 percent divinylbenzene, based on the total weight of i) and ii). The microporous copolymer beads have an average pore diameter of up to 2.8 nm, preferably from 0.5 to 2.5 nm, more preferably from 1 to 2 nm.

The required amount of adsorbent mainly depends on i) the volume of the gas lock(s), ii) the partial pressure of the solvent vapor to be adsorbed in the adsorption step a), iii) the adsorption and desorption temperatures in steps a) and c), iv) the required solvent vapor concentration in the outlet stream from the adsorber in the adsorption step a) and v) the type of solvent vapor and adsorbent.

The process of the present invention is very simple and avoids the contact of steam with the solvent in the desorption step c). Furthermore, apart from loading and/or unloading the gas lock, the system is closed.

In the process described in U.S. Patent US-A-4,583,985 the whole amount of outlet gases from the adsorber is directly released to the environment which is not the case in the present invention. According to the present invention the adsorbed solvent vapors need not be recovered or disposed of but they are only temporarily stored in the adsorber(s). The present invention mainly makes use of the adsorbent as a temporary storage system due to its different capacities at different temperatures.

Since the desorbed organic solvents are not condensed in a condenser but are directly recycled to the treating chamber or gas lock, a less sophisticated system for controlling the gas flow is required than in the dry cleaning machine disclosed in German Patent DE-C-36 09 587.

Furthermore, when condensing the desorbed organic solvents, the hot gas obtained by regeneration of the adsorbent must contain a high partial pressure of organic solvent vapors in order to achieve a sufficient condensation. In the method of the present invention, the gas obtained from the regeneration of the adsorbent needs not to fulfill such requirements.

Furthermore, the organic solvent which is obtained in the common step of condensing desorbed solvent vapors after the desorption, for example as disclosed in German Patent DE-C-36 09 587, has to be removed and handled in a separate step, for example by recycling or disposing of the condensed organic solvent. This additional step adds to the costs of known cleaning operations. According to the method of the present invention such an additional step is not necessary.

The apparatuses and method of the present invention are further illustrated with reference to the drawings. The expressions "outlet" and "inlet" conduit, end etc. as used further below relate to the direction of the gas circulation during the adsorption step a) of the method of the invention.

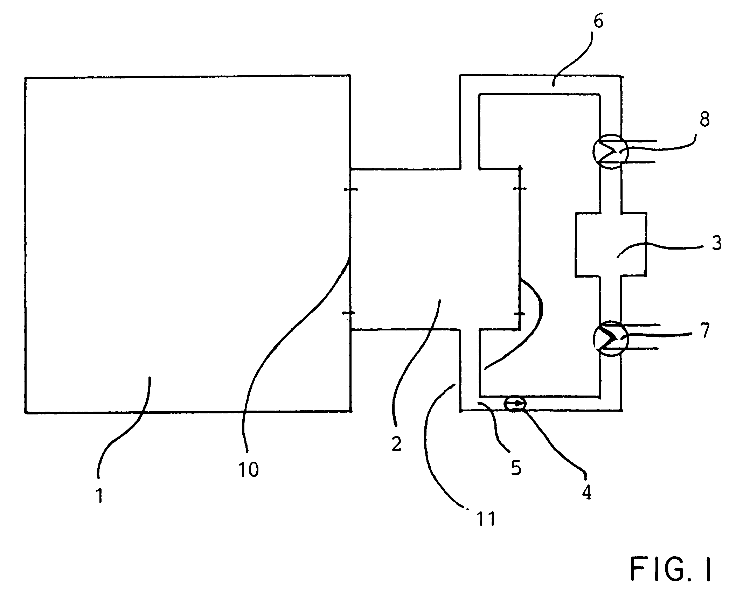

Referring now to Figure 1, one embodiment of the apparatus of the present invention comprises a treating chamber 1, a gas lock 2, an adsorber 3, a ventilator 4 (i.e, a device for circulating the various gases in the system), a conduit system connecting the gas lock and the adsorber and a control system allowing the control of gas circulation in the said conduit system. The conduit system contains an outlet conduit 5 of the gas lock 2 which is connected with the inlet end of the adsorber 3. The conduit system further comprises an inlet conduit 6 of the gas lock 3 which is connected with the outlet end the adsorber 3. The control system for controlling the gas circulation is very simple, either it allows the gas circulation between the gas lock 2 and the adsorber 3 or it interrupts the gas circulation. The control system typically consists of a set of two valves, such as known butterfly valves, located in the outlet conduit 5 and the outlet conduit 6 of the gas lock. The useful types of valves and their suitable positions in the conduit system for allowing the gas circulation are known in the art and therefore not discussed in great detail.

Typically the apparatus of the present invention also comprises one or more cleaning tanks comprising a liquid solvent which are located in the treating chamber 1. Cleaning tanks are known in the art and not further described herein.

The gas lock 2 is provided with a first or inside opening/closing means 10 located between the gas lock and the treating chamber 1 and with a second or outside opening/closing means 11 which is suitable for removing treated articles from the apparatus or for placing articles to be treated into the apparatus of the invention.

It is advisable to arrange the ventilator 4 in the conduit system between the outlet end of the gas lock 2 and the inlet end of the adsorber 3, as shown in Figure 1.

Advantageously, a cooler 7 is located in the conduit system close to the inlet end of the adsorber 3 and a heater 8 is located close to the outlet end of the adsorber. Alternatively, the adsorber 3 may be provided with a heat exchanger. Adsorbers comprising a heat exchanger are known in the art.

Advantageously, the apparatus of the invention contains a means for pressure compensation (not shown) in order to compensate for the pressure reduction/pressure increase due to the cooling/heating of the gases in the apparatus. The means for pressure compensation can be arranged to the gas lock or to the treating chamber or to both. Means for pressure compensation, for example bellows, surge tanks, or tanks with floating heads are generally known and not described here in full detail.

Preferably, the apparatus of the invention also contains a means of measuring the solvent vapor concentration in the solvent vapor/air mixture in the conduit system close to the inlet and outlet end of the adsorber 3.

When the apparatus illustrated by Figure 1 is in operation, articles are treated in the treating chamber 1. Either the first opening/closing means 10 or the second opening/closing means 11 or both are closed. Before opening the first opening/closing means, the second opening/closing means must be closed. When the treatment of the articles is complete, they are passed from the treating chamber 1 to the gas lock 2 via the opened first opening/closing means 10. The first opening/closing means is then closed and the solvent vapor/air mixture is circulated from the gas lock 2 to the adsorber 3 and back to the gas lock 2 by means of the ventilator 4 in the direction indicated by the arrow in Figure 1. If desired, the gas stream may be cooled before entering the adsorber by means of a cooler 7 and/or may be heated after having passed the adsorber by means of a heater 8. After sufficient adsorption, the second opening/closing means 11 is opened for unloading/loading purposes and closed again. The loaded adsorber is then desorbed at an increased temperature. In the desorption step the gas stream is circulated co-currently or counter-currently, compared to its flow direction in the previous adsorption step. The circulating gas stream is heated by means of the heater 8. Alternatively, the adsorbent may be directly heated by means of a heat exchanger (not shown).

Referring now to Figure 2, another embodiment of the apparatus of the present invention comprises a treating chamber 101, a gas lock 102, an adsorber 103, a ventilator 104 (i.e, a device for circulating the various gases in the system), a condenser 114, a conduit system connecting the gas lock, the condenser and the adsorber and a control system allowing the control of gas circulation in the said conduit system. The conduit system contains an outlet conduit 105 of the gas lock 102 which is connected with an inlet conduit 112 of the condenser and with an inlet conduit 116 of the adsorber 103. The conduit system further comprises an inlet conduit 106 of the gas lock 103 which is connected with an outlet conduit 113 of the condenser and with an outlet conduit of 117 of the adsorber 103. The control system allows two ways of gas circulation in the conduit system connecting the gas lock, the condenser and the adsorber, that is either
i) gas lock - condenser - gas lock or
ii) gas lock - adsorber - gas lock.

The adsorber and the condenser are in parallel. The control system typically consists of a set of valves, such as known three-way valves. The useful types of valves and their suitable positions in the conduit system for allowing the said two ways of gas circulation are known in the art and therefore not discussed in great detail. For example, a first three-way valve 118a is located at the junction point of the outlet conduit 105 of the gas lock, the inlet conduit 112 of the condenser and the inlet conduit 116 of the adsorber. A second three-way valve 118b is located at the junction point of the inlet conduit 106 of the gas lock, the outlet conduit 113 of the condenser and the outlet conduit 117 of the adsorber.

Typically the apparatus of the present invention also comprises one or more cleaning tanks comprising a liquid solvent which are located in the treating chamber 101. Cleaning tanks are known in the art and not further described herein.

The gas lock 102 is provided with a first or inside opening/closing means 110 located between the gas lock and the treating chamber 101 and with a second or outside opening/closing means 111 which is suitable for removing treated articles from the apparatus or for placing articles to be treated into the apparatus of the invention.

It is advisable to arrange the ventilator 104 in the conduit system between the gas lock 102 and the junction point of the outlet conduit 105, the inlet conduit 112 and the inlet conduit 116, as shown in Figure 2. If desired, the cleaning apparatus may be provided with a further ventilator (not shown) located between the adsorber 103 and the junction point of the outlet conduit 105, the inlet conduit 112 and the inlet conduit 116.

Advantageously, a cooler 107 is located in the inlet conduit 116 of the adsorber 103 and a heater 108 is located in the outlet conduit 117 of the adsorber. Alternatively, the adsorber 103 may be provided with a heat exchanger. Adsorbers comprising a heat exchanger are known in the art.

A heater 115 is advantageously arranged between the condenser 114 and the junction point of the inlet conduit 106 of the gas lock, the outlet conduit 113 of the condenser and the outlet conduit 117 of the adsorber. A heater is particularly suitable in the dry-cleaning of textiles when the solvent vapor/air mixture circulates between the gas lock and the condenser and this mixture is reheated after having passed the condenser for further drying of the articles in the gas lock. The condenser should be provided with a means for removing the recovered organic solvent from the adsorber. Such means, for example an outlet tube, are known.

Like the apparatus illustrated by Figure 1, the apparatus illustrated by Figure 2 advantageously contains a means for pressure compensation (not shown) in order to compensate for the pressure reduction/pressure increase due to the cooling/heating of the gases in the apparatus and a means of measuring the solvent vapor concentration in the solvent vapor/air mixture in the inlet conduit 116 and the outlet conduit 117 of the adsorber 103.

When the apparatus illustrated by Figure 2 is in operation, articles are treated in the treating chamber 101 as described with reference to Figure 1. When the treatment of the articles is completed, they are passed from the treating chamber 101 to the gas lock 102 via the opened first opening/closing means 110. The second opening/closing means 111 has been closed before opening the first opening/closing means 110. The first opening/closing means is then closed and the solvent vapor/air mixture is circulated from the gas lock 102 to the condenser 114 and back to the gas lock 102 by means of the ventilator 104 in the direction indicated by the arrow in Figure 2 or in the opposite direction.

After sufficient gas circulation and condensation of the solvent vapor, the solvent vapor/air mixture is circulated from the gas lock 102 to the adsorber 103 and back to the gas lock 102 by means of the ventilator 104 in the direction indicated by the arrow in Figure 2. If desired, the gas stream may be cooled before entering the adsorber by means of a cooler 107 and/or may be heated after having passed the adsorber by means of a heater 108. As illustrated by Figure 2, the adsorber 103 is moved in a direction which is substantially perpendicular to the gas flow through the adsorber 103 during the adsorption step. It is understood that this embodiment of the adsorber is not only useful for the apparatus of the invention as illustrated by Figure 2 but in all apparatuses of the present invention.

After sufficient adsorption, the second opening/closing means is opened for unloading/loading purposes and closed again. The loaded adsorber is then desorbed at an increased temperature. In the desorption step the gas stream is circulated co-currently or counter-currently, compared to its flow direction in the previous adsorption step. The circulating gas stream is heated by means of the heater 108. Alternatively, the adsorbent may be directly heated by means of the heat exchanger (not shown). During the desorption step the adsorber 103 is moved in a direction which is substantially perpendicular to the gas flow through the adsorber 103 during the desorption step and which is opposite to the movement of the adsorber in the adsorption step.

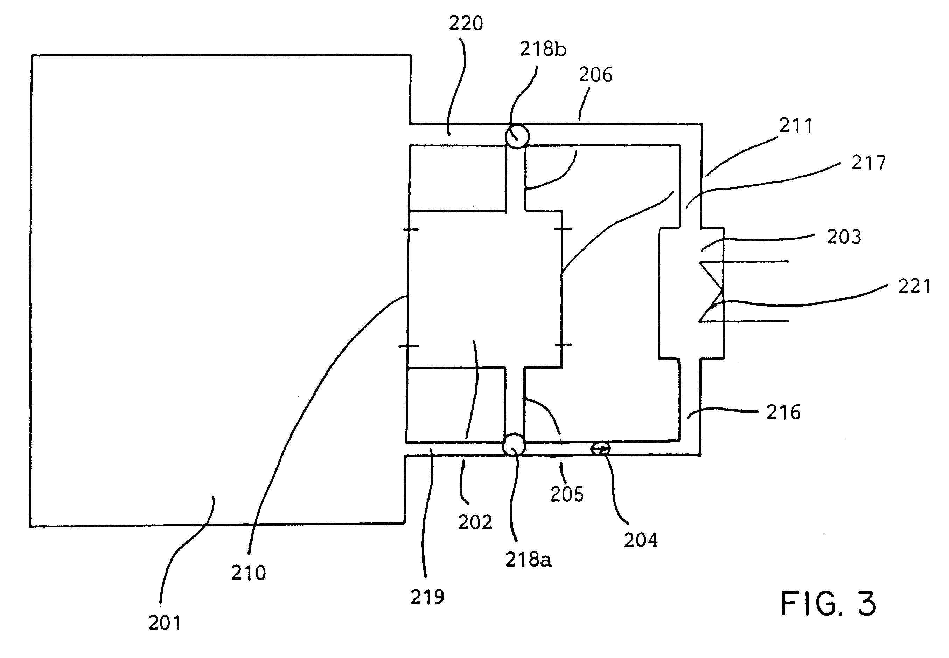

Referring now to Figure 3, another embodiment of the apparatus of the present invention comprises a treating chamber 201, a gas lock 202, an adsorber 203, a ventilator 204, a conduit system connecting a) the gas lock and the adsorber and b) the treating chamber and the gas lock as well as a control system allowing the control of gas circulation in the said conduit system. The conduit system contains an outlet conduit 219 of the treating chamber 201 which is connected with an inlet conduit 216 of the adsorber and an outlet conduit 205 of the gas lock 202 which is also connected with the inlet conduit 216 of the adsorber 203. The conduit system further comprises an inlet conduit 220 of the treating chamber 201 which is connected with an outlet conduit 217 of the adsorber 203 and an inlet conduit 206 of the gas lock 202 which is also connected with the outlet conduit of the adsorber 203. The control system allows two ways of gas circulation: either i) gas lock - adsorber - gas lock or ii) treating chamber - adsorber - treating chamber. The control system typically consists of a set of valves, such as known three-way valves. For example, a first three-way valve 218a is located at the junction point of the outlet conduit 205 of the gas lock, the outlet conduit 219 of the treating chamber and the inlet conduit 216 of the adsorber. A second three-way valve 218b is located at the junction point of the inlet conduit 206 of the gas lock, the inlet conduit 220 of the treating chamber and the outlet conduit 217 of the adsorber.

The gas lock 202 is provided with a first or inside opening/closing means 210 and with a second or outside opening/closing means 211 as described above with reference to Figure 1.

The adsorber 203 is provided with a heat exchanger 221. Adsorbers comprising a heat exchanger are known in the art. Alternatively, a heater and cooler may be located close to the adsorber 203, for example as illustrated in Figures 1 and 2.

Typically the apparatus of the present invention also comprises one or more cleaning tanks, a means for pressure compensation and a means of measuring the solvent vapor concentration in the solvent vapor/air mixture as described above with reference to Figure 1.

When the apparatus illustrated by Figure 3 is in operation, articles are treated in the treating chamber 201 and passed from the treating chamber 210 to the gas lock 202 as described above with reference to Figure 1. The adsorption step is carried out by circulating the solvent vapor/air mixture from the gas lock 202 to the adsorber 203 and back to the gas lock 202 by means of the ventilator 204 as described above with reference to Figure 1. After sufficient adsorption, the second opening/closing means 211 is opened for unloading/loading purposes and closed again.

The loaded adsorber is then desorbed at an increased temperature by circulating at least once a gas stream from the treating chamber 201 to the adsorber 203 containing a heated adsorbent and recycling the outlet gas stream from the adsorber 203 back to the treating chamber 201. In the desorption step the gas stream is circulated co-currently or counter-currently, compared to its flow direction in the previous adsorption step. The adsorbent is heated by means of the heat exchanger 221.

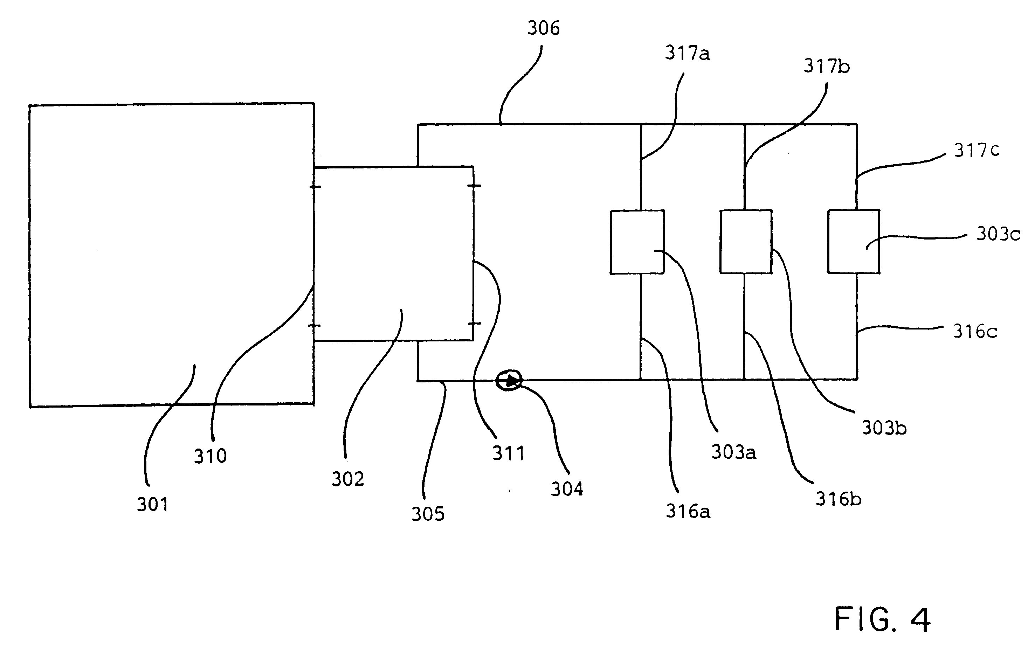

Referring now to Figure 4, Figure 4 illustrates that the apparatus may contain several adsorbers in parallel (three adsorbers are shown). The apparatus contains a treating chamber 301, a gas lock 302 being provided with two opening/closing means 310 and 311, adsorbers 303a, 303b and 303c and a ventilator 304. The valve system which allows the circulation of the gas stream from the gas lock 302 over the first adsorber 303a or over the second adsorber 303b or over the third adsorber 303c and back to the gas lock 302 is known and not shown in Figure 4. The outlet conduit 305 of the gas lock 302 is connected with the inlet conduits 316a, 316b and 316c of the adsorbers 303a, 303b and 303c. The inlet conduit 306 of the gas lock 302 is connected with the outlet conduit conduits 317a, 317b and 317c of the adsorbers 303a, 303b and 303c.

In operation, the cleaning apparatus illustrated by Figure 4 essentially works in the same way as the cleaning apparatus illustrated by Figure 1. In the adsorption step, the solvent vapor/air mixture is circulated from the gas lock 302 to the adsorber 303a and back to the gas lock 302 by means of the ventilator 304. If the adsorbent in adsorber 303a is exhausted prior to sufficient adsorption of the organic solvent, the solvent vapor/air mixture is circulated from the gas lock 302 to the adsorber 303b and back to the gas lock. If desired, the solvent vapor/air mixture is also circulated from the gas lock 302 to a third adsorber 303c and back to the gas lock. The apparatus may contain additional adsorbers which are not shown in Figure 4. In the desorption step, generally the adsorbent in adsorber 303c is first desorbed, then the adsorbent in adsorber 303b and last the adsorbent in adsorber 303a by circulating a gas stream from the gas lock 302 at least once through the adsorbers and back to the gas lock. The temperature in the adsorbers is increased in the manner described above with reference to Figures 1, 2 or 3.

It is to be understood that several embodiments of the apparatus illustrated by Figures 1, 2, 3 and 4 can be combined. For example, the apparatuses illustrated by Figures 1, 2 and 3 can be modified in such a manner that they contain several adsorbers. The conduit system in the apparatuses illustrated by Figures 1, 2 and 4 may be modified to allow a connection between the treating chamber and the adsorber(s). Furthermore, the apparatuses illustrated by Figures 1, 3 and 4 may be modified to contain a condenser. The adsorbent in the adsorbers of the apparatuses illustrated by Figures 1, 2 and 4 may be directly heated with a heat exchanger as shown in Figure 3 or the adsorbers of the apparatuses illustrated by Figures 3 and 4 may be heated by means of a cooler/heater system shown in Figures 1 and 2. Furthermore, the apparatuses illustrated by Figures 1, 3 and 4 may contain one or more adsorbers of the type shown in Figure 2.

## Claims

1. A method of controlling the solvent vapor concentration in a gas lock of an apparatus containing a treating chamber and at least one gas lock which solvent vapor is mixed with air and is obtained in the treatment of articles in the treating chamber (1; 101; 201; 301) comprising the following steps:
a) isolating the gas lock from the treating chamber, passing gaseous solvent vapor/air mixture from the gas lock (2; 102; 202; 302) through at least one adsorber (3; 103; 203; 303a, 303b, 303c) containing an adsorbent for the organic solvent and recycling the outlet gas stream from the adsorber to the gas lock;
b) after completion of the adsorption, removing treated articles from the gas lock and/or loading the gas lock with articles to be treated; and
c) heating the adsorbent and passing a gas stream from the treating chamber or from the gas lock through said at least one adsorber containing the adsorbent and recycling the outlet stream from the adsorber directly to the treating chamber or to the gas lock.

2. The method of Claim 1 wherein
articles are cleaned in the treating chamber and are placed into the gas lock after the cleaning operation via a first opening/closing means (10; 110; 210; 310),
the first opening/closing means connecting the treating chamber and the gas lock is closed,
adsorption step a) is carried out;
after completion of the adsorption a second opening/closing means (11; 111; 211; 311) is opened and the cleaned articles are removed from the gas lock via said second opening/closing means.

3. The method of Claim 1 or 2 wherein in step a) the temperature of the vapor/air mixture that passes the adsorber(s) (3; 103; 203, 303a; 303b; 303c) is below 50°C, preferably below 30°C.

4. The method of any one of Claims 1 to 3 wherein in step c) the adsorbent is heated to a temperature of more than 70°C, preferably from 80°C to 120°C.

5. The method of any one of Claims 1 to 4 wherein the adsorbent for the organic solvent contains adsorptive porous resin beads prepared by swelling purified haloalkylated, cross-linked beads of a copolymer comprising units of i) styrene or alkylstyrene and ii) divinylbenzene and/or trivinylbenzene in an inert organic liquid and post-cross-linking the swollen beads in the presence of a Friedel-Crafts catalyst.

6. The method of Claim 5 wherein the adsorptive porous resin beads are microporous and are derived from i) 99.8 to 98.2 weight percent of styrene or alkylstyrene and ii) 0.2 to 1.8 weight percent of divinylbenzene and/or trivinylbenzene, based on the total weight of i) and ii).

7. The method of any one of Claims 1 to 6 wherein said at least one adsorber containing an adsorbent for organic solvents is moved in a direction being substantially perpendicular to the gas flow through the adsorber.

8. The method of any one of Claims 1 to 7 wherein the solvent vapor is partially condensed before it is passed through said at least one adsorber during adsorption step a).

9. An apparatus for carrying out the method of any one of Claims 1 to 7 containing a treating chamber (1; 101; 201; 301), at least one gas lock (2; 102; 202; 302), at least one adsorber (3; 103; 203; 303a, 303b, 303c), a conduit system, at least one ventilator (4; 104; 204) and a control system allowing the control of the gas circulation in said conduit system
wherein
the conduit system connects a) the gas lock(s) and the adsorber(s) and, optionally, b) the treating chamber and the adsorber(s) and
the ventilator(s) and the control system allow one or two ways of gas circulation, said ways being
i) gas lock - adsorber(s) - gas lock; or, optionally,
ii) treating chamber - adsorber(s) - treating chamber.

10. An apparatus for carrying out the method of Claim 8 containing a treating chamber (1; 101; 201; 301), at least one gas lock (2; 102; 202; 302), at least one adsorber (3; 103; 203; 303a, 303b, 303c), at least one condenser (114), a conduit system, at least one ventilator (4; 104; 204) and a control system allowing the control of the gas circulation in said conduit system
wherein
the condenser(s) and the adsorber(s) are in parallel,
the conduit system connects a) the gas lock(s) and the condenser(s), b) the gas lock(s) and the adsorber(s) and, optionally, c) the treating chamber and the adsorber(s) and
the ventilator(s) and the control system allow two or three ways of gas circulation, said ways being
i) gas lock - condenser - gas lock; or
ii) gas lock - adsorber(s) - gas lock; or, optionally,
iii) treating chamber - adsorber(s) - treating chamber.

## Patentansprüche

1. Verfahren zur Steuerung der Konzentration von Lösungsmitteldämpfen in einer Gasschleuse einer Vorrichtung mit einer Behandlungskammer und mindestens einer Gasschleuse, wobei der Lösungsmitteldampf mit Luft gemischt vorliegt und bei der Behandlung von Gegenständen in der Behandlungskammer (1; 101; 201; 301) erhalten wird, welches folgende Schritte umfasst:
a) Absperren der Gasschleuse von der Behandlungskammer, Durchleiten der gasförmigen Lösungsmitteldampf-Luft-Mischung aus der Gasschleuse (2; 102; 202; 302) durch mindestens einen Adsorber (3; 103; 203; 303a, 303b, 303c), enthaltend ein Adsorbens für das organische Lösungsmittel, und Zurückführen des austretenden Gasstromes vom Adsorber zur Gasschleuse;
b) nach Vollendung der Adsorption Entfernen der behandelten Gegenstände aus der Gasschleuse und/oder Beladen der Gasschleuse mit zu behandelnden Gegenständen; und
c) Erwärmen des Adsorbens und Durchleiten eines Gasstromes aus der Behandlungskammer oder aus der Gasschleuse durch den zumindest einen das Adsorbens enthaltenden Adsorber und Zurückführen des aus dem Adsorber austretenden Gasstromes unmittelbar zur Behandlungskammer oder zur Gasschleuse.

2. Verfahren nach Anspruch 1, wobei
die Gegenstände in der Behandlungskammer gereinigt werden und nach dem Reinigungsvorgang durch ein erstes Öffnungs- und Schliessmittel (10; 110; 210; 310) in die Gasschleuse eingeführt werden,
das erste Öffnungs- und Schliessmittel, das die Behandlungskammer mit der Gasschleuse verbindet, geschlossen wird,
Adsorptionsschritt a) durchgeführt wird;
nach Vollendung der Adsorption ein zweites Öffnungs- und Schliessmittel (11; 111; 211; 311) geöffnet wird und die gereinigten Gegenstände aus der Gasschleuse durch das zweite Öffnungs- und Schliessmittel entfernt werden.

3. Verfahren nach Anspruch 1 oder 2, wobei die Temperatur der Dampf-Luft-Mischung, die im Schritt a) durch den Adsorber (3; 103; 203; 303a, 303b, 303c) geleitet wird, unter 50°C, vorzugsweise unter 30°C, liegt.

4. Verfahren nach einem der Ansprüche 1 bis 3, wobei das Adsorbens im Schritt c) auf eine Temperatur von über 70°C, vorzugsweise von 80°C auf 120°C, erwärmt wird.

5. Verfahren nach einem der Ansprüche 1 bis 4, wobei das Adsorbens für das organische Lösungsmittel adsorptive, poröse Harzperlen enthält, die hergestellt werden durch Quellen von gereinigten haloalkylierten, vernetzten Perlen eines Copolymers, enthaltend Einheiten von i) Styrol oder Alkylstyrol und ii) Divinylbenzol und/oder Trivinylbenzol in einer inerten organischen Flüssigkeit, und Nachvernetzen der gequollenen Perlen in Anwesenheit eines Friedel-Crafts-Katalysators.

6. Verfahren nach Anspruch 5, wobei die adsorptiven porösen Harzperlen mikroporös sind und von i) 99,8 bis 98,2 Gewichtsprozent Styrol oder Alkylstyrol und von ii) 0,2 bis 1,8 Gewichtsprozent Divinylbenzol und/oder Trivinylbenzol, basierend auf dem Gesamtgewicht von i) und ii), abgeleitet sind.

7. Verfahren nach einem der Ansprüche 1 bis 6, wobei der mindestens eine ein Adsorbens für organische Lösungsmittel enthaltende Adsorber in eine Richtung bewegt wird, die im wesentlichen quer zum Gasstrom durch den Adsorber liegt.

8. Verfahren nach einem der Ansprüche 1 bis 7, wobei der Lösungsmitteldampf teilweise kondensiert wird, bevor er durch den mindestens einen Adsorber während des Adsorptionsschrittes a) durchgeleitet wird.

9. Vorrichtung zur Durchführung des Verfahrens nach einem der Ansprüche 1 bis 7 enthaltend eine Behandlungskammer (1; 101; 201; 301), mindestens eine Gasschleuse (2; 102; 202; 302), mindestens einen Adsorber (3; 103; 203; 303a, 303b, 303c), ein Leitungssystem, mindestens ein Gebläse (4; 104; 204) und ein Steuersystem, das die Steuerung der Gaszirkulation im Leitungssystem gestattet,
wobei
das Leitungssystem a) die Gasschleuse(n) und den oder die Adsorber verbindet, und gegebenenfalls b) die Behandlungskammer und den oder die Adsorber, und
das oder die Gebläse und das Steuersystem einen oder zwei Wege der Gaszirkulation gestatten, wobei die Wege
i) Gasschleuse - Adsorber - Gasschleuse; oder, gegebenenfalls,
ii) Behandlungskammer - Adsorber - Behandlungskammer sind.

10. Vorrichtung zur Durchführung des Verfahrens nach Anspruch 8, enthaltend eine Behandlungskammer (1; 101; 201; 301), mindestens eine Gasschleuse (2; 102; 202; 302), mindestens einen Adsorber (3; 103; 203; 303a, 303b, 303c), mindestens einen Kondensator (114), ein Leitungssystem, mindestens ein Gebläse (4; 104; 204) und ein Steuersystem, das die Steuerung der Gaszirkulation im Leitungssystem gestattet,
wobei
der oder die Kondensator(en) und der oder die Adsorber parallel angeordnet sind,
das Leitungssystem a) die Gasschleuse(n) und den oder die Kondensator(en), b) die Gasschleuse(n) und den oder die Adsorber verbindet und, gegebenenfalls, c) die Behandlungskammer und den oder die Adsorber verbindet, und
das oder die Gebläse und das Steuersystem zwei oder drei Wege der Gaszirkulation zulassen, wobei die Wege
i) Gasschleuse - Kondensator - Gasschleuse; oder
ii) Gasschleuse - Adsorber - Gasschleuse; oder, gegebenenfalls,
iii) Behandlungskammer - Adsorber - Behandlungskammer sind.

## Revendications

1. Procédé permettant de maîtriser la concentration de vapeurs de solvant dans une écluse à gaz d'un appareillage comprenant une chambre de traitement et au moins une écluse à gaz, les vapeurs de solvant étant mélangées avec de l'air et obtenues au cours du traitement d'objets dans la chambre de traitement (1; 101; 201; 301), ledit procédé comprenant les étapes suivantes :
a) isoler l'écluse à gaz de la chambre de traitement, faire sortir de l'écluse à gaz (2; 102; 202; 302) le mélange gazeux d'air et de vapeurs de solvant et le faire passer à travers au moins un adsorbeur (3; 103; 203; 303a, 303b, 303c) contenant un agent adsorbant les solvants organiques, et renvoyer dans l'écluse à gaz le courant gazeux sortant de l'adsorbeur ;
b) une fois l'adsorption achevée, enlever de l'écluse à gaz les objets traités et/ou placer dans l'écluse à gaz des objets destinés à être traités ; et
c) chauffer l'agent adsorbant et faire passer un courant gazeux, venant de la chambre de traitement ou de l'écluse à gaz, à travers lesdits adsorbeurs au nombre d'au moins un, contenant l'agent adsorbant, et renvoyer le courant sortant de l'adsorbeur directement dans la chambre de traitement ou dans l'écluse à gaz.

2. Procédé conforme à la revendication 1, dans lequel on nettoie des objets dans la chambre de traitement et on les place dans l'écluse à gaz, après l'opération de nettoyage, en les faisant passer par un premier dispositif d'ouverture/fermeture (10; 110; 210; 310),
on ferme le premier dispositif d'ouverture/fermeture faisant communiquer la chambre de traitement et l'écluse à gaz,
on réalise l'étape (a) d'adsorption, et
une fois l'adsorption achevée, on ouvre un second dispositif d'ouverture/fermeture (11; 111; 211; 311) et on enlève de l'écluse à gaz les objets nettoyés, en les faisant passer par ledit second dispositif d'ouverture/fermeture.

3. Procédé conforme à la revendication 1 ou 2, dans lequel, au cours de l'étape (a), la température du mélange d'air et de vapeurs qui traverse le ou les adsorbeurs (3; 103; 203; 303a, 303b, 303c) vaut moins de 50°C, et de préférence moins de 30°C.

4. Procédé conforme à l'une des revendications 1 à 3, dans lequel, au cours de l'étape (c), on chauffe l'agent adsorbant à une température supérieure à 70°C et qui vaut de préférence de 80°C à 120°C.

5. Procédé conforme à l'une des revendications 1 à 4, dans lequel l'agent adsorbant les solvants organiques comporte des perles de résine poreuses et adsorbantes, que l'on a préparées en faisant gonfler, dans un liquide organique inerte, des perles réticulées, halogénoalkylées et purifiées d'un copolymère comportant des motifs (i) de styrène ou d'alkylstyrène et (ii) de divinylbenzène et/ou de trivinylbenzène, et en soumettant ces perles gonflées à une post-réticulation, en présence d'un catalyseur de Friedel-Crafts.

6. Procédé conforme à la revendication 5, dans lequel les perles de résine poreuses et adsorbantes sont microporeuses et sont obtenues à partir de (i) 99,8 à 98,2 % en poids de styrène ou d'alkylstyrène et de (ii) 0,2 à 1,8 % en poids de divinylbenzène et/ou de trivinylbenzène, par rapport au poids total de (i) et (ii).

7. Procédé conforme à l'une des revendications 1 à 6, dans lequel on fait bouger lesdits adsorbeurs au nombre d'au moins un, contenant un agent adsorbant les solvants organiques, dans une direction pratiquement perpendiculaire à celle de l'écoulement du gaz traversant l'adsorbeur.

8. Procédé conforme à l'une des revendications 1 à 7, dans lequel les vapeurs de solvant sont partiellement condensées avant de traverser lesdits adsorbeurs au nombre d'au moins un, au cours de l'étape d'adsorption (a).

9. Appareillage permettant de mettre en oeuvre un procédé conforme à l'une des revendications 1 à 7, qui comporte une chambre de traitement (1; 101; 201; 301), au moins une écluse à gaz (2; 102; 202; 302), au moins un adsorbeur (3; 103; 203; 303a, 303b, 303c), un système de canalisations, au moins un ventilateur (4; 104; 204) et un système de commande permettant de commander la circulation des gaz dans ledit système de canalisations, et dans lequel
le système de canalisations fait communiquer (a) la ou les écluses à gaz et le ou les adsorbeurs, et éventuellement (b) la chambre de traitement et le ou les adsorbeurs, et
le ou les ventilateurs et le système de commande permettent aux gaz en circulation de suivre un ou deux chemins, qui sont i) écluse à gaz - adsorbeur(s) - écluse à gaz, ou éventuellement ii) chambre de traitement - adsorbeur(s) - chambre de traitement.

10. Appareillage permettant de mettre en oeuvre un procédé conforme à la revendication 8, qui comporte une chambre de traitement (1; 101; 201; 301), au moins une écluse à gaz (2; 102; 202; 302), au moins un adsorbeur (3; 103; 203; 303a, 303b, 303c), au moins un condenseur (114), un système de canalisations, au moins un ventilateur (4; 104; 204) et un système de commande permettant de commander la circulation des gaz dans ledit système de canalisations, et dans lequel
le ou les condenseurs et le ou les adsorbeurs sont disposés en parallèle,
le système de canalisations fait communiquer (a) la ou les écluses à gaz et le ou les condenseurs, (b) la ou les écluses à gaz et le ou les adsorbeurs, et éventuellement (c) la chambre de traitement et le ou les adsorbeurs, et
le ou les ventilateurs et le système de commande permettent aux gaz en circulation de suivre deux ou trois chemins, qui sont
i) écluse à gaz - condenseur(s) - écluse à gaz, ou
ii) écluse à gaz - adsorbeur(s) - écluse à gaz, ou éventuellement
iii) chambre de traitement - adsorbeur(s) - chambre de traitement.
